# EUROPEAN PATENT APPLICATION

(11) **EP 4 458 130 A1**
(43) Date of publication of application: **06.11.2024**
(21) Application number: 24168414.1
(22) Date of filing: 04.04.2024
(51) Int. Cl.: A01D 87/12, G06Q 10/0833, G06Q 50/02

(54) **BALE COLLECTION MONITORING**

(30) Priority: 03.05.2023 GB 202306563
(71) Applicant: AGCO International GmbH, 8212 Neuhausen am Rheinfall (CH)
(72) Inventor: Demmelmaier, Joseph, 87616 Marktoberdorf (DE)
(74) Representative: AGCO Intellectual Property Department

(57) **Abstract**

Systems and methods are provided for monitoring a bale collection operation performed by an agricultural machine in a working environment. Operational data indicative of a working parameter of the agricultural machine is used to determine occurrence of a bale collection operation. The determined bale collection operation is associated with one or more bale identifiers in a database linked to the working environment, and the database is updated to indicate the identification of a collection of a bale corresponding to the respective bale identifier(s) in dependence on the association.

## Description

### CROSS-REFERENCE TO RELATED APPLICATIONS

Not applicable.

### FIELD

Embodiments of the present disclosure relate generally to methods and systems for monitoring a bale collection operation performed by an agricultural machine.

### BACKGROUND

During a bale forming process, bale-specific data may be recorded, which may relate or example to the quality of the bale, its location within a working environment, a moisture level associated with the bale, the number of layers per bale, as well as information on the addition of additives and the dimensions of the bale. This may further include assigning a bale identifier, such as an identification number, to each bale and storing this, optionally along with the bale-specific information in a datastore, such as a cloud storage location. This information may be later used for determining storing and/or trading strategies, for example.

In extensions of this, known systems may utilise stored bale information to determine a recommendation for the subsequent harvesting processes. This may include a logistics plan, e.g. with regard to a route, timing or the like of a bale collection operation. This may advantageously provide an operator with an optimum or improved collection strategy to minimize collection time, or for collection of bales of the same or similar qualities, etc.

However, to date no solution has been provided which then monitors the collection operation, e.g. following the route planning operation outlined above, e.g. to determine which bales have been collected and which have not. This can be a challenge for the operator of the collection vehicle, especially at night, in environments with hilly terrain, and/or where the operator is unfamiliar with the environment.

It is an aim of an embodiment or embodiments of the disclosure described herein to improve upon known systems for monitoring and/or guiding a bale collection operation.

### BRIEF SUMMARY

In an aspect there is provided a control system for monitoring a bale collection operation performed by an agricultural machine in a working environment, the control system comprising one or more controllers, and being configured to: receive operational data indicative of a working parameter of the agricultural machine; determine an occurrence of a bale collection operation in dependence on the operational data; associate the determined bale collection operation with one or more bale identifiers in a database linked to the working environment; and update the database to indicate the identification of a collection of a bale corresponding to the respective bale identifier(s) in dependence on the association.

Advantageously, the present disclosure provides a solution whereby operational data indicative of a working parameter of the agricultural machine is utilised to determine whether a bale collection operation has occurred. This is then linked to a database of one or more bale identifiers to update respective bale identifier(s) based on the determination of the bale collection operation. This may be utilised, for example, in further planning for future collection - e.g. by automating the marking of bales as collected or uncollected within a given environment based solely on characteristic operation of the agricultural machine in the environment performing the collection operation.

The working parameter may comprise a location of the agricultural machine within the working environment. For example, the operational data may comprise GNSS data from a location module of or otherwise associated with the agricultural machine. The control system may be configured to determine occurrence of a bale collection operation in dependence on the location of the agricultural machine within the working environment, for example, determining the location of the agricultural machine with respect to a stored location of one or more bales within the working environment. This may include analysis of a location of the machine over time, for instance to determine a movement of the machine with respect to the location of one or more bales within the environment which is characteristic of a bale collection operation, and determine occurrence of the bale collection operation in dependence thereon. The control system may be configured to determine occurrence of a bale collection operation in dependence on the location of the machine corresponding to, e.g. being at or within a predetermined threshold distance of, the location one or more bales for a time period, the time period being, for example, predetermined in dependence on a characteristic time period for a bale collection operation to take place.

The working parameter may comprise an operational speed of the agricultural machine. This may include a forward speed of the machine, for example. The control system may be configured to determine occurrence of a bale collection operation in dependence on a reduction in the forward speed of the machine. The control system may be configured to determine occurrence of a bale collection operation in dependence on the machine coming to a stop. The control system may be configured to determine an occurrence of a bale collection operation in dependence on the forward speed of the machine corresponding to a characteristic operational profile - e.g. a profile which corresponds to moving towards the location of the bale, stopping to collect the bale before moving away from the original bale location.

The working parameter may comprise a direction of travel of the agricultural machine. The control system may be configured to determine occurrence of a bale collection operation in dependence on a direction of travel the machine moving towards the stored location of a bale within the working environment. The control system may be configured to determine an occurrence of a bale collection operation in dependence on the direction of travel of the machine corresponding to a characteristic operational profile - e.g. a profile which corresponds to moving towards the location of the bale and subsequently moving away from the original bale location, e.g. towards the location of a collection vehicle, or the like.

The working parameter may comprise a measure of an operational state of a lifting implement of or operably coupled to the agricultural machine. The lifting implement may comprise a front loader, for example. The lifting implement may comprise a bale grabber.

The working parameter of the lifting implement may correspond to a load on the implement. This may be determined from operational data from a load sensor operably configured to determine a measure of the load on the lifting implement. The load on the implement may be indicative of the presence of a bale lifted by the implement. The control system may be operable to determine a number of bales on a lifting implement in dependence on the load. The control system may be configured to determine occurrence of a bale collection operation in dependence on an increase in the load on the lifting implement. The increase in load may be compared with a characteristic or expected load for the lifting of a bale, and the determination of the bale collection operation may be dependent on the comparison. This may advantageously distinguish between bale lifting and other lifting operations which may be performed concurrently. The characteristic load may comprise a characteristic load profile for a bale collection operation, which may include, for example an increase in load experienced as the bale is lifted and a reduction in load as the bale is subsequently lowered by the agricultural machine, e.g. onto a collection vehicle or the like.

The working parameter of the lifting implement may comprise a measure of a fluid pressure associated with the hydraulic or pneumatic control system for the lifting implement. For instance, the working parameter may comprise a measure of a hydraulic pressure associated with the lifting implement hydraulic control system. The control system may be configured to determine occurrence of a bale collection operation in dependence on a change in the fluid pressure. The fluid pressure change may be compared with a characteristic or expected change for the lifting of a bale, and the determination of the bale collection operation may be dependent on the comparison. The characteristic fluid pressure change may comprise a characteristic pressure profile for a bale collection operation.

The working parameter of the lifting implement may comprise a measure of the lift height. The implement may be provided with a lift sensor for measuring a parameter indicative of the lift height of the implement. This may include an accelerometer, gyroscope, inertial measurement unit (IMU) or the like. The control system may be configured to determine occurrence of a bale collection operation in dependence on a change in the lift height. The lift height change may be compared with a characteristic or expected change for the lifting of a bale, and the determination of the bale collection operation may be dependent on the comparison. The characteristic lift height change may comprise a characteristic lift height profile for a bale collection operation, including for example a raising of the implement to lift the bale, followed by a lowering of the bale, e.g. onto a receiving vehicle or the like.

The control system may be configured to utilise a plurality of working parameters of the agricultural machine to determine the bale collection operation. This may, for example, include a location of the agricultural machine and a measure of the operational state of a lifting implement of the agricultural machine.

The control system may be configured to utilise the location of the agricultural machine within the working environment to associate the bale collection operation with the one or more bale identifiers. For example, the control system may be configured to associate the bale collection operation with the or each bale identifiers determined or known (e.g. from stored location data) to be closest to the location of the identified bale collection operation.

The one or more bale identifiers may contain or be otherwise associated with further bale information. The further bale information may comprise, for example, a measure of the weight of the bale, a measure of the bale content, including e.g. crop constituents, for example, a bale formation time corresponding to when the bale was formed. The further bale information may be determine prior to, during or following a bale forming operation. This may be linked to the bale, for example, utilising an RFID chip or the like associated (e.g. coupled to the bale twine) with the bale. Such a setup is known in the art, and will not be described in detail herein for brevity.

The further bale information may comprise a location of the associated bale within the working environment.

The database of the bale identifier(s) may comprise mapped data of the working environment. For example, each bale identifier may be associated with a given location within the working environment. This may, for instance, comprise a GNSS location, or local position as determined by a local positioning module.

The one or more bale identifiers may each be associated with a collection identifier. The collection identifier may be indicative of a collection status of the respective bale in the working environment. The control system may be configured to update the collection identifier. The control system may be configured to update the collection identifier in dependence on an associated of a bale collection operation with a respective bale identifier.

The control system may comprise or be communicably coupled to a user interface. The user interface may comprise a portable user device, such as a smartphone, tablet computer, laptop computer or similar devices. The user interface may comprise a display terminal of the agricultural machine.

The control system may be configured to control operation of the user interface. This may include the control system, or one or more controllers thereof, having an output for outputting directly, or indirectly (e.g. via a communication module associated with the control system and/or machine) one or more control signals for controlling operation of the user interface. The control system may be configured to control operation of the user interface to display a graphical representation of the data stored in the database. For example, where the database has mapped data stored therein, the control system may be operable to control display of a graphical representation of the mapped data to an operator or user of the user interface.

The control system may be configured to generate a graphical representation of the data stored in the database which includes a graphical indicator of the collection identifier. The graphical indicator of the collection identifier may, for example, comprise a color associated with the collection status of the respective bale. The control system may be configured to change the color of the graphical representation for a given bale identifier in dependence on the determination of a bale collection operation of the respective bale.

The one or more controllers may be configured to calculate a collection confidence factor. The collection confidence factor may quantify the certainty or confidence for a given bale collection operation determination. This may include a measure of how closely an observed working parameter meets an expected or characteristic profile or level for a bale collection operation. For example, where the control system is configured to compare an observed working parameter with a threshold or characteristic parameter profile, a collection confidence factor may quantify how closely the parameter follows or meets that threshold or profile. Where the parameter comprises a location of the agricultural machine, the threshold may comprise a distance threshold, for example, and the confidence factor may be dependent on the distance. For example, when the machine is determined to be within a given threshold distance a higher confidence factor may be determined when compared with a greater distance or separation between the machine and the stored location of a bale. Where the parameter comprises an operational status of, e.g. a load on, a lifting implement, the threshold or profile may relate to a threshold or characteristic load for a bale collection operation and the confidence factor may be dependent on how much the observed load differs from the characteristic or expected load for a bale collection operation.

The collection confidence factor may be determined in dependence on multiple working parameters.

The one or more controllers may be configured to associate a bale collection operation in dependence on the determined confidence factor. For instance, a predetermined confidence factor threshold may be utilised. Where the determined confidence factor meets the threshold an association may be made. Where the determined confidence factor does not meet the threshold either an association may not be made, and/or such an instance may be flagged. This may include flagging this to an operator via an associated user interface. The user interface may be utilised to receive a user input indicative of a confirmation or rejection of a flagged bale collection operation. The control system may be configured to perform the association of the bale collection operation with the one or more bale identifiers in dependence on the user input.

The one or more controllers may collectively comprise an input (e.g. an electronic input) for receiving one or more input signals. The one or more input signals may comprise the operational data indicative of the working parameter of the agricultural machine. The one or more controllers may collectively comprise one or more processors (e.g. electronic processors) operable to execute computer readable instructions for controlling operational of the control system, for example, to determine the occurrence of the bale collection operation and/or associate the determined bale collection operation with the one or more bale identifiers. The one or more processors may be operable to generate one or more control signals for controlling operation of one or more operational components. The one or more controllers may collectively comprise an output (e.g. an electronic output) for outputting the one or more control signals. This may include utilising a communication module associated with the control system for updating of the database.

The control system may be hosted on board the agricultural machine. For example, the one or more controllers may form part of a computing module of the agricultural machine, having computer readable instructions stored thereon for performance of the operational steps discussed herein. In a variant, all or part of the control system may be hosted off board, for example on a remote server, or a cloud based server. In such embodiments, the control system may be operable to receive operational data via a communication link with the agricultural machine, such as via a communication module of the agricultural machine which is connected over a network.

A further aspect provides an agricultural machine comprising the control system of any aspect described herein. The agricultural machine may comprise a tractor having a hitch point or the like for coupling one or more implements thereto. The one or more implements or components thereof may comprise means for monitoring operational parameter(s) thereof. The operational parameter(s) may be utilised by the control system in the manner discussed herein for identifying a bale collection operation, for example.

A further aspect provides a method of monitoring a bale collection operation performed by an agricultural machine in a working environment, the method comprising: receiving operational data indicative of a working parameter of the agricultural machine; determining an occurrence of a bale collection operation in dependence on the operational data; associating the determined bale collection operation with one or more bale identifiers in a database linked to the working environment; and updating the database to indicate the identification of a collection of a bale corresponding to the respective bale identifier(s) in dependence on the association.

The method may comprise performing any one or more of the functionalities of the control system described hereinabove.

A further aspect provides computer software comprising computer readable instructions which, when executed by one or more electronic processors, causes performance of a method in accordance with any aspect described herein.

A yet further aspect provides a computer readable medium having the computer software of the preceding aspect stored thereon.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 is a simplified cross-sectional side view illustrating an agricultural machine embodying aspects of the present disclosure;
FIG. 2 schematically illustrates an embodiment of a control system of the present disclosure;
FIG. 3 schematically illustrates an embodiment of a system of the present disclosure; and
FIG. 4 illustrates a graphical user interface illustrating the operational use of aspects of the disclosure discussed herein.

### DETAILED DESCRIPTION

The Figures illustrate embodiments of the present disclosure. Specifically, illustrated herein is a system 100 for monitoring a bale collection operation performed by an agricultural machine, here a tractor 10, in a working environment such as an agricultural field. The system 100 includes a control system 101 which utilises operational data indicative of a working parameter of the tractor 10 to determine occurrence of a bale collection operation in the manner discussed herein. The determined bale collection operation is associated with one or more bale identifiers in a database linked to the working environment, which here may be hosted on a memory means, such as a remote server 62, and the database is updated under control of the control system 101 to indicate the identification of a collection of a bale corresponding to the respective bale identifier(s) in dependence on the association. In the illustrated embodiments, the database comprises mapped data of the environment which may be graphically represented on a user interface, here via either a user terminal 64 in the operator cab 14 of the tractor 10, or on a portable user device 164. In this way, changes made to the data stored in the database by the control system 101 may be graphically represented to a user-e.g. the operator of the tractor 10.

### Tractor

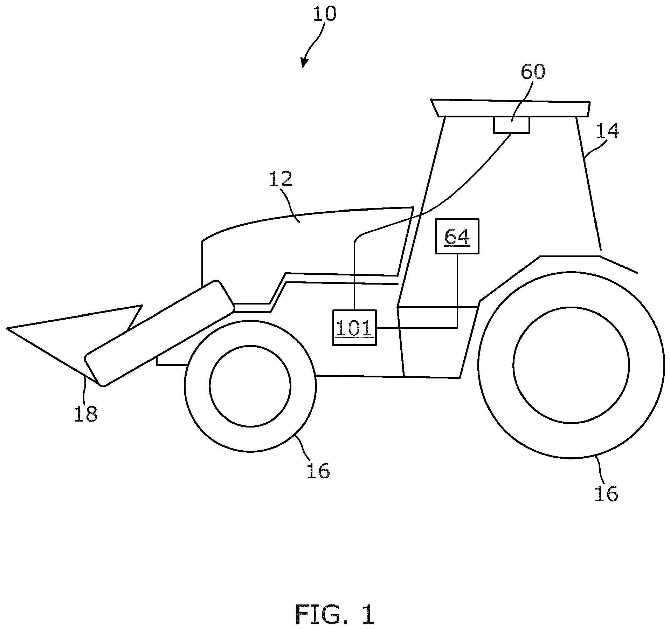

FIG. 1 illustrates an agricultural machine in the form of a tractor 10 embodying aspects of the present disclosure. The tractor 10 has a body 12, operator cab 14, wheels 16 and a front loader 18, here illustrated with a bucket attachment, although it will be appreciated that this is not limiting. A user interface in the form of a display terminal 64 is provided within the operator cab 14 of the tractor 10, and is used in the manner discussed herein, e.g. to provide a graphical representation of stored data indicative of a bale collection operation within the working environment. The illustrated example further includes a positioning module 60 providing positional data for the tractor 10, specifically a GNSS position for the tractor 10, utilised by the control system 101 for determining a bale collection operation. Both the display terminal 64 and positioning module 60 are operably coupled here to an onboard control system 101 for performing the operational steps of the present disclosure, discussed hereinbelow.

### Control System

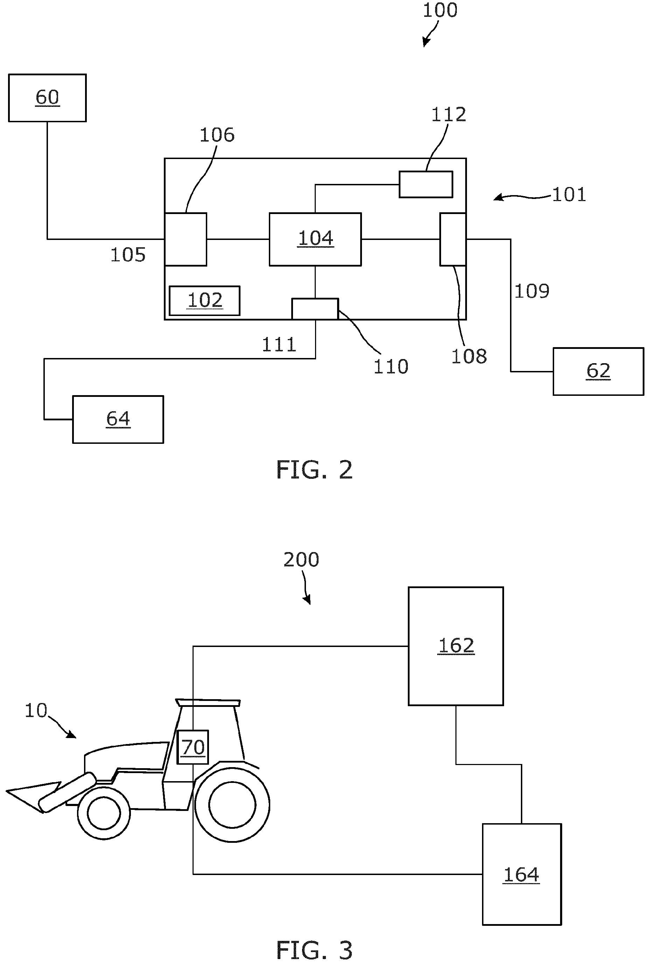

FIG. 2 illustrates an embodiment of a system 100. The system 100 comprises a control system 101 which is configured for controlling one or more operable components, e.g. display terminal 64, remote memory means 62, etc. associated with the tractor 10. In the illustrated embodiment, the control system 101 is configured for controlling the storing and updating of data contained within a database stored at remote memory means 62 relating to a bale collection task performed by the tractor 10 in the working environment, and display terminal 64 is utilised to provide a representation of the stored data to an operator of the tractor 10.

Control system 101 comprises a controller 102 having an electronic processor 104, an electronic input 106 and electronic outputs 108, 110. The processor 104 is operable to access a memory 112 of the controller 102 and execute instructions stored therein to perform the steps and functionality of the present disclosure discussed herein, e.g. by determining occurrence of a bale collection operation, updating data stored in the remote memory means 62, and/or controlling the user interface 64 to provide a representation of data stored at the remote memory means 62 in the manner discussed herein.

Here, the processor 104 is operable to receive operational data in the form of GNSS data from the positioning module 60 via input 106. This takes the form of input signals 105 and is indicative of a working parameter corresponding to the position or location of the tractor 10 with respect to the working environment. The processor 104 is configured to analyse this data and determine therefrom occurrence of a bale collection operation therefrom. For instance, the control system 101 can determine the location of the tractor 10 with respect to a stored location of one or more bales within the working environment. By determining the location of the tractor 10 over time, it may be possible to determine a movement of the tractor 10 with respect to the location of one or more bales within the environment which is characteristic of a bale collection operation. This can include, for example, a forward movement towards the stored bale location followed by a period where the tractor 10 is stationary (i.e. whilst lifting the bale from the ground), and optionally followed then by a movement of the tractor 10, e.g. towards a receiving vehicle such as a trailer or the like for carrying collected bales. Additionally or alternatively, the control system 101 can determine occurrence of a bale collection operation in dependence on the location of the tractor 10 corresponding to, e.g. being at or within a predetermined threshold distance of, the location one or more bales for a predetermined time period. The threshold distance may relate to the accuracy of the positioning system utilised by the system. The time period can be dependent, for example on a characteristic time period for a bale collection operation to take place. This may discount instances where the tractor 10 is driven past the location of one or more bales but where no collection operation takes place.

As shown, controller 102 includes an electronic output 108 configured to output control signals 109 generated by the processor 104 for updating data relating to the bale collection task stored in remote memory means 62. Here, given the data is stored remotely, output 108 serves as a communication module and forms a wireless data link to the memory 62 for updating data stored therein. Specifically, once a bale collection operation has been determined by the control system 101, e.g. in the manner discussed above utilising GNSS data from the positioning module 60, the control system 101 associates this collection operation with one or more bale identifiers corresponding to the bales in the working environment, and stored in a database on the remote memory 62. This includes updating a collection identifier of the bale identifier(s) which is indicative of a collection status of the respective bale in the working environment, e.g. by switching the collection status from a "not collected" to a "collected" status.

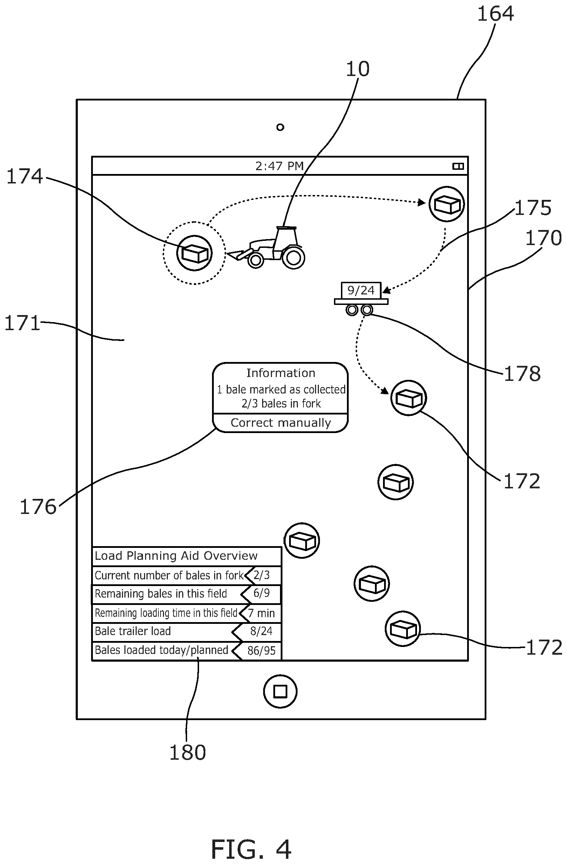

Output 110 is operably coupled to display terminal 64 in the operator cab 14. As will be appreciated and is discussed herein, in alternative arrangement the user interface 64 may form part of a portable device, such as a phone or tablet computer (FIG. 3, portable user device 164). Here, the control system 101 is operable to control operation of the display terminal 64, e.g. through output of control signals 111 in order to display data to an operator of the tractor 10 relating to the operation of the control system 101. Specifically, the control system 101 is operable to control the display terminal 64 to display to the operator a graphical representation of data stored at remote memory means 62 indicative of the bale collection task - see FIG. 4 and accompanying description provided herein.

### Alternative Arrangements

Additionally or alternatively other working parameters associated with the tractor 10 may be used to determine the bale collection operation. For instance, the working can include an operational speed of the agricultural machine, such as a forward speed of the machine, and the control system 101 may be configured to determine an occurrence of a bale collection operation in dependence on the forward speed of the tractor 10 corresponding to a characteristic operational profile - e.g. a profile which corresponds to moving towards the location of the bale, stopping to collect the bale before moving away from the original bale location. The working parameter can include a direction of travel of the tractor 10, and the control system 101 can determine occurrence of a bale collection operation in dependence on determination of a characteristic operational profile - e.g. a profile which corresponds to moving towards the location of the bale and subsequently moving away from the original bale location, e.g. towards the location of a collection vehicle, or the like. Operational data may be received at the control system 101 utilising a datalink with a controller network of the tractor 10, for instance.

The operational state of a lifting implement, here the front loader 18 of the tractor 10 can also be used. For instance, the working parameter of the front loader 18 can correspond to a load on the implement, which may be determined from operational data from a load sensor operably coupled to the front loader 18. The control system 101 can determine occurrence of a bale collection operation in dependence on an increase in the load on the front loader 18, which may be compared with a characteristic or expected load for the lifting of a bale. This may advantageously distinguish between bale lifting and other lifting operations which may be performed concurrently. A measure of a fluid pressure associated with the hydraulic or pneumatic control system for the lifting implement may also be utilised. For instance, the working parameter can include a measure of a hydraulic pressure associated with the hydraulic control system. The fluid pressure, or a change therein may be compared with a characteristic or expected change for the lifting of a bale, and the determination of the bale collection operation may be dependent on the comparison. Further, the working parameter of the front loader 18 can include a measure of the lift height, determined utilising a lift sensor operably coupled to the front loader 18. A characteristic or expected change in lift height can be used to determine a bale collection operation.

Where the working parameter relates to measures other than the location of the tractor 10 within the working environment, it may additionally be necessary to utilise the location of the tractor 10 to be able to associate the bale collection operation with the one or more bale identifiers. For example, the control system 101 can associate a determined bale collection operation with one or more bale identifiers determined or known (e.g. from stored location data) to be closest to the location of the identified bale collection operation.

### Distributed System

FIG. 3 shows an alternative embodiment where system 200 is distributed across a number of devices. Here, the system 200 utilises a communication module 70 on the tractor 10 for transmitting operational data from the tractor 10 relating to the working parameter(s) to a remote server 162. The remote server 162 functions in a similar manner to the remote memory 62 of system 100 shown in the preceding Figures. For instance, remote server 162 has stored thereon data indicative of bale identifiers for each of one or more bales located within the working environment, including for each bale a collection identifier indicative of a collection status of the bale. However, the remote server 162 is additionally configured to performing the operational steps of control system 101. In this manner, the data processing is handled off board from the tractor 10, reducing the processing and power requirements on board. Otherwise, the processing setup of remote server 162 encompasses operation of processor 104 of control system 101 and functions in the same manner as discussed herein.

Display terminal 64 is replaced by a portable user device 164 which includes a wireless data connection, e.g. via an internet connection, to the remote server 162 for accessing information stored therein. Specifically, the portable user device 164 can access the data stored relating to the collection status, at least, of each of the bale identifiers and use this information to generate a graphical representation of that data for use, e.g. by an operator of the tractor 10. An example graphical representation in shown in FIG. 4, and discussed below.

### User Interface

The present disclosure extends, in embodiments, to the generation of a graphical representation of data relating to the collection status of bales or bale identifiers for use by an operator of the tractor 10. FIG. 4 illustrates an example user interface and graphical representation displayed thereon for this purpose.

Here, the user interface comprises a display screen 170 on a portable user device in the form of a tablet computer 164. The graphical representation comprises a representation of the working environment 171, with indicia representative of the location of bales 172, 174 within the environment. The location of tractor 10 is also shown on the representation. The indicia are generated in dependence on the collection status (as inferred from the collection identifier stored in relation to each of the corresponding bale identifiers - see above), and are different dependent on the collection status of the corresponding bale. For instance, uncollected bales may be identified with a red indicator 174, collected bales may be identified in green, or their indicator may be removed from the displayed representation following collection. Bales which are identified as being in the vicinity of the tractor 10 - e.g. ones currently being collected - may be represented by a different indicator, shown here highlighted with an additional circular graphical overlap 174. In this way, a graphical representation of a mapped working environment can be provided which quickly illustrates to a user pertinent information to the bale collection task being performed.

Additional graphical components are also illustrated in the graphical representation shown in FIG. 4. For instance, a recommended collection path 175 is overlaid onto the representation suggesting routes between different bales in the environment and/or a collection vehicle 178 for unloading collected bales from the tractor 10. The collection vehicle indicator 178 may be provided with an overlay indicative of the capacity of the collection vehicle so the operator is provided with information on how many additional bales can be collected and unloaded onto that particular vehicle. FIG. 4 also shows a pop up box 176 requesting or offering an ability for a user to input or correct the collection status determined by the system. Finally, an overlay 180 may be provided with additional information relating to the collection task, including number of bales to be collected, estimated time for collection and other stats which may be helpful for the operator.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. A control system for monitoring a bale collection operation performed by an agricultural machine in a working environment, the control system comprising one or more controllers, and being configured to:
receive operational data indicative of a working parameter of the agricultural machine;
determine an occurrence of a bale collection operation in dependence on the operational data;
associate the determined bale collection operation with one or more bale identifiers in a database linked to the working environment; and
update the database to indicate the identification of a collection of a bale corresponding to the respective bale identifier(s) in dependence on the association.

2. A control system as claimed in claim 1, wherein the working parameter comprises a location of the agricultural machine within the working environment; and wherein the control system is configured to determine occurrence of a bale collection operation in dependence on a determination of the location of the agricultural machine with respect to a stored location of one or more bales within the working environment.

3. A control system of any preceding claim, wherein the working parameter comprises an operational speed of the agricultural machine; and wherein the control system is configured to determine an occurrence of a bale collection operation in dependence on the forward speed of the machine corresponding to a characteristic operational profile.

4. A control system of any preceding claim, wherein the working parameter comprises a direction of travel of the agricultural machine; and wherein the control system is configured to determine an occurrence of a bale collection operation in dependence on the direction of travel of the machine corresponding to a characteristic operational profile.

5. A control system of any preceding claim, wherein the working parameter comprises a measure of an operational state of a lifting implement of or operably coupled to the agricultural machine.

6. A control system of claim 5, wherein:
the working parameter of the lifting implement corresponds to a load on the implement; and wherein the control system is configured to determine occurrence of a bale collection operation in dependence on an increase in the load on the lifting implement;
the working parameter of the lifting implement comprises a measure of a fluid pressure associated with the hydraulic or pneumatic control system for the lifting implement; and wherein the control system is configured to determine occurrence of a bale collection operation in dependence on a change in the fluid pressure; and/or
the working parameter of the lifting implement comprises a measure of the lift height; and wherein the control system is configured to determine occurrence of a bale collection operation in dependence on a change in the lift height.

7. A control system of any preceding claim, configured to utilise a plurality of working parameters of the agricultural machine to determine the bale collection operation.

8. A control system of any preceding claim, configured to utilise the location of the agricultural machine within the working environment to associate the bale collection operation with the one or more bale identifiers.

9. A control system of any preceding claim, wherein the one or more bale identifiers contain or are otherwise associated with further bale information, the further bale information comprising one or more of: a measure of the weight of the bale; a measure of the bale content; a bale formation time; and a location of the associated bale within the working environment.

10. A control system of any preceding claim, wherein the database of the bale identifier(s) comprises mapped data of the working environment.

11. A control system of any preceding claim, wherein the one or more bale identifiers are each be associated with a collection identifier; the collection identifier being indicative of a collection status of the respective bale in the working environment; and wherein the control system is configured to update the collection identifier in dependence on an associated of a bale collection operation with a respective bale identifier.

12. A control system of any preceding claim, comprising or being communicably coupled to a user interface; and wherein the control system is configured to control operation of the user interface to display a graphical representation of the data stored in the database.

13. A control system of any preceding claim, configured to: calculate a collection confidence factor, the collection confidence factor quantifying the certainty or confidence for a given bale collection operation determination; and associate a bale collection operation in dependence on the determined confidence factor.

14. An agricultural machine comprising the control system of any preceding claim.

15. A method of monitoring a bale collection operation performed by an agricultural machine in a working environment, the method comprising:
receiving operational data indicative of a working parameter of the agricultural machine;
determining an occurrence of a bale collection operation in dependence on the operational data;
associating the determined bale collection operation with one or more bale identifiers in a database linked to the working environment; and
updating the database to indicate the identification of a collection of a bale corresponding to the respective bale identifier(s) in dependence on the association.
